# EUROPEAN PATENT APPLICATION

(11) **EP 4 525 366 A1**
(43) Date of publication of application: **19.03.2025**
(21) Application number: 23902134.8
(22) Date of filing: 11.08.2023
(51) Int. Cl.: H04L 9/40, H04L 9/08

(54) **KEY AGREEMENT METHOD AND APPARATUS FOR APPLET**

(30) Priority: 13.12.2022 CN 202211606601
(71) Applicant: Alipay (Hangzhou) Information Technology Co., Ltd., Hangzhou, Zhejiang 310000 (CN)
(72) Inventor: SHI, Shangcheng, Hangzhou, Zhejiang 310000 (CN); LI, Wenjie, Hangzhou, Zhejiang 310000 (CN)
(74) Representative: Fish & Richardson P.C.
(86) International application number: PCT/CN2023/112431
(87) International publication number: WO 2024/124924

(57) **Abstract**

Some embodiments of this specification provide key negotiation methods and apparatuses for an applet application. The method includes: receiving a first request that is sent by the applet application and that is used to request to authorize a login to a first server, and sending a second request associated with the first request to a second server; and after receiving an authorization certificate and a session key that are determined and sent by the second server based on the second request, storing the session key, and sending, to the first server, the authorization certificate indicating that the second server authorizes the first server to request the session key. As such, key negotiation reduces a risk of key leakage and enhances security.

## Description

### TECHNICAL FIELD

One or more embodiments of this specification relate to the field of information security technologies, and in particular, to key negotiation methods and apparatuses for an applet application.

### BACKGROUND

Applet applications are installation-free and easy-to-use, and therefore are widely used and welcomed by users upon launching. To ensure confidentiality of data sent by the applet applications, some applet applications (such as government applets and bank applets) need to encrypt the data before sending the data. However, keys used for applet applications to encrypt data are usually embedded by developers in front-end code of the applet applications. Consequently, the keys of the applet applications are easily stolen by attackers, presenting a risk of key leakage.

### SUMMARY

One or more embodiments of this specification describe key negotiation methods and apparatuses for an applet application, so as to improve security of a key during applet application negotiation, and reduce a risk of key leakage.

According to a first aspect, a key negotiation method for an applet application is provided. The method is applied to an applet platform and includes: receiving a first request sent by the applet application, where the first request is used to request to authorize a login to a first server, and the first server is used to provide a service to the applet application; sending a second request to a second server, where the second request is used to request to authorize a login to the first server, and the second server is used to provide a service to the applet platform; receiving an authorization certificate and a session key that are sent by the second server, where the authorization certificate and the session key are determined by the second server based on the second request; storing the session key; and sending the authorization certificate to the first server, where the authorization certificate is a certificate indicating that the second server authorizes the first server to request the session key.

Optionally, after the sending the authorization certificate to the first server, the method further includes: receiving a third request sent by the applet application, where the third request includes first data; encrypting the first data by using the session key based on the third request to obtain second data; and sending the second data to the first server, where the second data are decrypted by the first server by using the session key to obtain the first data.

Optionally, after the sending the authorization certificate to the first server, the method further includes: receiving third data sent by the first server, where the third data are obtained by the first server by encrypting fourth data by using the session key; decrypting the third data by using the session key to obtain the fourth data; and sending the fourth data to the applet application.

According to a second aspect, a key negotiation method for an applet application is provided. The method is applied to a first server, the first server is used to provide a service to the applet application, and the method includes: receiving an authorization certificate sent by an applet platform, where the authorization certificate is a certificate indicating that a second server authorizes the first server to request a session key; sending a fourth request to the second server, where the fourth request includes the authorization certificate, and the second server is used to provide a service to the applet platform; receiving the session key and a user identifier that are sent by the second server, where the session key and the user identifier are determined by the second server based on the fourth request; and logging in to a user account corresponding to the user identifier based on the user identifier.

Optionally, after the logging in to a user account corresponding to the user identifier based on the user identifier, the method further includes: receiving second data sent by the applet platform, where the second data are obtained by the applet platform by encrypting first data by using the session key; and decrypting the second data by using the session key to obtain the first data.

Optionally, after the decrypting the second data by using the session key to obtain the first data, the method further includes: providing a service to the applet application based on the first data; generating fourth data when providing a service to the applet application; encrypting the fourth data by using the session key to obtain third data; and sending the third data to the applet platform.

According to a third aspect, a key negotiation method for an applet application is provided. The method is applied to a second server, the second server is used to provide a service to an applet platform, and the method includes: receiving a second request sent by the applet platform, where the second request is used to request to authorize a login to a first server; determining an authorization certificate and a session key based on the second request; and sending the authorization certificate and the session key to the applet platform.

Optionally, after the sending the authorization certificate and the session key to the applet platform, the method further includes: receiving a fourth request sent by the first server, where the fourth request is used to request to acquire the session key and a user identifier; and sending the session key and the user identifier to the first server based on the fourth request.

According to a fourth aspect, a key negotiation apparatus for an applet application is provided. The apparatus is applied to an applet platform, and includes a first receiving module, a first sending module, and a storage module. The first receiving module is configured to receive a first request sent by the applet application, where the first request is used to request to authorize a login to a first server, and the first server is used to provide a service to the applet application. The first sending module is configured to send a second request to a second server, where the second request is used to request to authorize a login to the first server, and the second server is used to provide a service to the applet platform. The first receiving module is configured to receive an authorization certificate and a session key that are sent by the second server, where the authorization certificate and the session key are determined by the second server based on the second request. The storage module is configured to store the session key. The first sending module is configured to send the authorization certificate to the first server, where the authorization certificate is a certificate indicating that the second server authorizes the first server to request the session key.

According to a fifth aspect, a key negotiation apparatus for an applet application is provided. The apparatus is applied to a first server, the first server is used to provide a service to the applet application, and the apparatus includes a second receiving module, a second sending module, and a login module. The second receiving module is configured to receive an authorization certificate sent by an applet platform, where the authorization certificate is a certificate indicating that a second server authorizes the first server to request a session key. The second sending module is configured to send a fourth request to the second server, where the fourth request includes the authorization certificate, and the second server is used to provide a service to the applet platform. The second receiving module is configured to receive the session key and a user identifier that are sent by the second server, where the session key and the user identifier are determined by the second server based on the fourth request, and the session key is the same as a session key stored in the applet platform. The login module is configured to log in to a user account corresponding to the user identifier based on the user identifier.

According to a sixth aspect, a key negotiation apparatus for an applet application is provided. The apparatus is applied to a second server, the second server is used to provide a service to an applet platform, and the method includes a third receiving module, a third sending module, and a determination module. The third receiving module is configured to receive a second request sent by the applet platform, where the second request is used to request to authorize a login to a first server. The determination module is configured to determine an authorization certificate and a session key based on the second request. The third sending module is configured to send the authorization certificate and the session key to the applet platform.

According to a seventh aspect, a computing device is provided, including a memory and a processor. The memory stores executable code, and the processor executes the executable code to implement the method according to any one of the embodiments of this specification.

According to the key negotiation methods and apparatuses for an applet application provided in some embodiments of this specification, the session key that is the same as the session key on the first server is stored on the applet platform, instead of storing the session key in the applet application such that the applet application cannot access the session key. Therefore, an attacker who attacks the applet application cannot steal the session key, thereby reducing a risk of key leakage and enhancing security.

In addition, the session key is associated with a login status of a user. In other words, the session key is valid as long as the user account is logged in. When the user account is logged in again, the session key is automatically updated, thereby further improving security of the session key.

Further, the session key does not need to be stored in the applet application, and a developer does not need to implement complex encryption logic on the applet application, thereby simplifying logic of the applet application.

### BRIEF DESCRIPTION OF DRAWINGS

To describe the technical solutions in some embodiments of this specification more clearly, the following briefly describes the accompanying drawings needed for describing some embodiments. Clearly, the accompanying drawings in the following description are merely some embodiments of this specification, and a person of ordinary skill in the art can still derive other drawings from these accompanying drawings without creative efforts.
FIG. 1A is a flowchart illustrating a key negotiation method for an applet application applied to an applet platform, according to some embodiments of this specification;
FIG. 1B is a flowchart illustrating a processing method for an applet platform after key negotiation of an applet application is completed, according to some embodiments of this specification;
FIG. 1C is a flowchart illustrating a processing method for an applet platform after key negotiation of an applet application is completed, according to some other embodiments of this specification;
FIG. 2 is a flowchart illustrating a key negotiation method for an applet application applied to a first server, according to some embodiments of this specification;
FIG. 3 is a flowchart illustrating a key negotiation method for an applet application applied to a second server, according to some embodiments of this specification;
FIG. 4 is a schematic diagram illustrating a key negotiation apparatus for an applet application applied to an applet platform, according to some embodiments of this specification;
FIG. 5 is a schematic diagram illustrating a key negotiation apparatus for an applet application applied to a first server, according to some embodiments of this specification; and
FIG. 6 is a schematic diagram illustrating a key negotiation apparatus for an applet application applied to a second server, according to some embodiments of this specification.

### DESCRIPTION OF EMBODIMENTS

The solutions provided in this specification are described below with reference to the accompanying drawings.

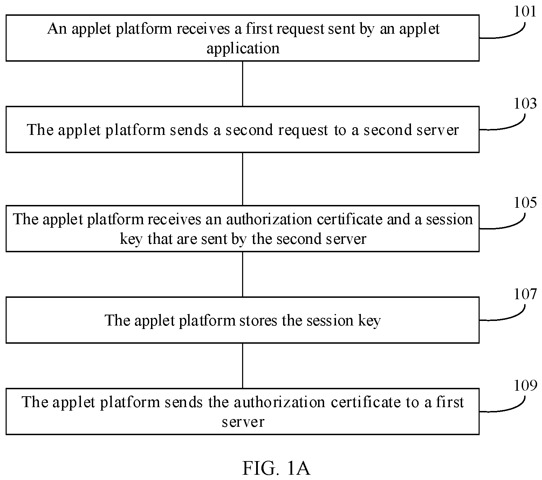

FIG. 1A is a flowchart illustrating a key negotiation method for an applet application applied to an applet platform, according to some embodiments of this specification. It can be understood that the method can be performed by any apparatus, device, platform, or device cluster having computing and processing capabilities. The method includes step 101 to step 109.

Step 101: An applet platform receives a first request sent by an applet application.

The applet platform corresponds to a first server, and the first server is used to provide a service to the applet application.

The first request is used to request to acquire authorization information of the first server. Specifically, the first request is used to request to authorize a login to the first server, or the first request is used to request to acquire login information of the first server, such as a user account and a password.

For example, the first request is used to request to acquire authorization of Open Authorization (OAuth) of the first server.

Step 103: The applet platform sends a second request to a second server, where the second request is used to request to authorize a login to the first server, and the second server is used to provide a service to the applet platform.

The second request is obtained by the applet platform by converting the first request, and has the same function as the first request. Information included in the second request is not completely the same as information included in the first request.

For example, the applet platform forwards the first request sent by the applet application to the second server. However, in a forwarding process, the applet platform sends a connection address of the applet platform together with the first request to the second server. Therefore, the applet platform sends the second request to the second server, where the second request can include the first request, and the connection address of the applet platform.

After the second server receives the second request sent by the applet platform, the second server can determine, based on the second request, an authorization certificate used to log in to the first server, and a session key for communication between the applet platform and the first server. The second server sends the authorization certificate and the session key to the applet platform. For example, the authorization certificate can be represented as code, and the session key can be represented as session_key.

Step 105: The applet platform receives the authorization certificate and the session key that are sent by the second server.

As described above, the authorization certificate and the session key are determined by the second server based on the second request.

Step 107: The applet platform stores the session key.

Step 109: The applet platform sends the authorization certificate to the first server, where the authorization certificate is a certificate indicating that the second server authorizes the first server to request the session key.

It can be understood that the applet platform sends the authorization certificate to the first server such that the first server obtains the session key from the second server based on the authorization certificate.

During specific implementation, step 109 can be specifically as follows: The applet platform sends the authorization certificate to the applet application. The applet application sends, to the applet platform, a request for sending the authorization certificate to the first server. The applet platform sends the authorization certificate to the first server based on the request. The first server sends, to the second server, a request for acquiring the session key and a user identifier. The second server sends, to the first server based on the request, the session key that is the same as that of the applet platform and the user identifier. The first server receives the session key and the user identifier, and stores the session key. The first server authenticates a user identity based on the user identifier. Specifically, the first server compares the user identifier with a prestored user identifier. When a result of the comparison indicates that the user identifier is the same as the prestored user identifier, the first server determines that the user identity authentication succeeds, and logs in to a user account corresponding to the user identifier.

After the first server logs in to the user account, the first server can send user login status information to the applet platform. The user login status information can include a user login status, a user temporary identity, etc., and the user temporary identity can be represented as cookie. After the applet platform receives the user login status information, the applet platform returns a login result to the applet application to notify the applet application whether the login to the first server succeeds.

As such, the session key that is the same as the session key on the first server is stored on the applet platform, instead of storing the session key in the applet application such that the applet application cannot access the session key. Therefore, an attacker who attacks the applet application cannot steal the session key, thereby reducing a risk of key leakage and enhancing security.

In addition, the session key is associated with a login status of a user. In other words, the session key is valid as long as the user account is logged in. When the user account is logged in again, the session key is automatically updated, thereby further improving security of the session key.

In addition, the session key does not need to be stored in the applet application, and a developer does not need to implement complex encryption logic on the applet application, thereby simplifying logic of the applet application.

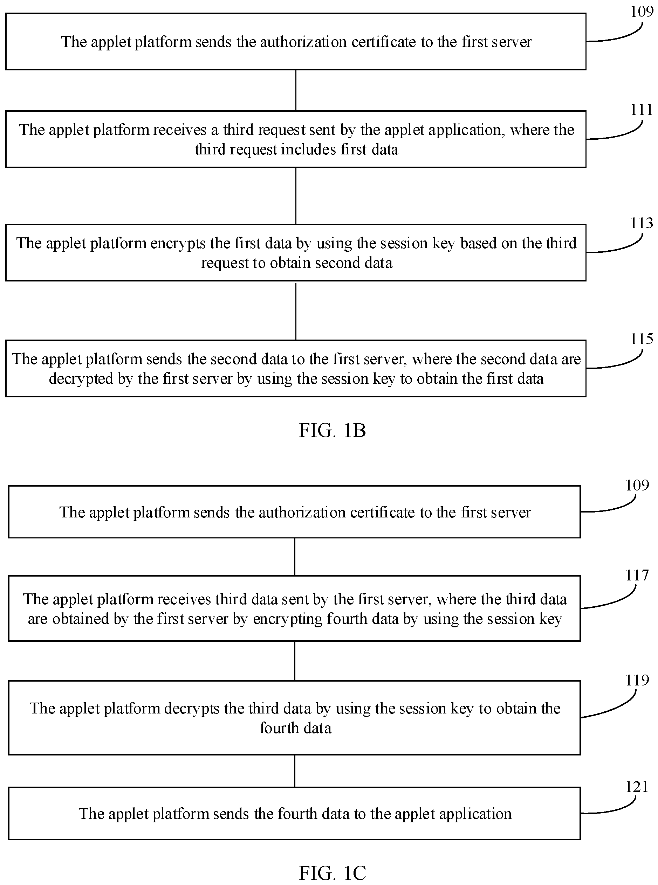

In some embodiments, as shown in FIG. 1B, after step 109 is performed, the key negotiation method for an applet application provided in some embodiments of this specification further includes step 111 to step 115.

Step 111: The applet platform receives a third request sent by the applet application, where the third request includes first data.

The third request is used to request to send the first data, and set an encryption option. The encryption option can be understood as an encryption mode or an encryption key.

Step 113: The applet platform encrypts the first data by using the session key based on the third request to obtain second data.

For example, the applet platform encrypts the first data by using the session key (such as session_key) stored in step 107, to obtain the second data.

Step 115: The applet platform sends the second data to the first server, where the second data are decrypted by the first server by using the session key to obtain the first data.

After the applet sends the second data to the first server, the first server receives the second data. The first server decrypts the second data by using the session key that is the same as the session key stored on the applet platform, to obtain the first data.

Further, when the applet platform sends the second data to the first server, the applet platform sends the user temporary identity to the first server. The first server receives the user temporary identity, and authenticates the user based on the user temporary identity.

As such, the same session key is stored on the applet platform and the first server. When the applet application transmits data to the first server, the applet platform and the first server can encrypt and decrypt the transmitted data by using the session key. Security of the session key is high, thereby further ensuring security of data transmission.

In some embodiments, as shown in FIG. 1C, after step 109 is performed, the key negotiation method for an applet application provided in some embodiments of this specification further includes step 117 to step 121.

Step 117: The applet platform receives third data sent by the first server, where the third data are obtained by the first server by encrypting fourth data by using the session key.

For example, as described above, after the first server decrypts the second data by using the session key to obtain the first data, the first server processes the first data to obtain the fourth data. After the first server encrypts the fourth data by using the session key to obtain the third data, the first server sends the third data to the applet platform.

Step 119: The applet platform decrypts the third data by using the session key to obtain the fourth data.

After the applet platform receives the third data sent by the first server, the applet platform decrypts the third data by using the session key to obtain the fourth data.

Step 121: The applet platform sends the fourth data to the applet application.

It can be understood that the applet platform returns response information of the first data to the applet application, where the response information includes the fourth data.

As such, the same session key is stored on the applet platform and the first server. When the applet application transmits data to the first server, the applet platform and the first server can encrypt and decrypt the transmitted data by using the session key. Security of the session key is high, thereby further ensuring security of data transmission.

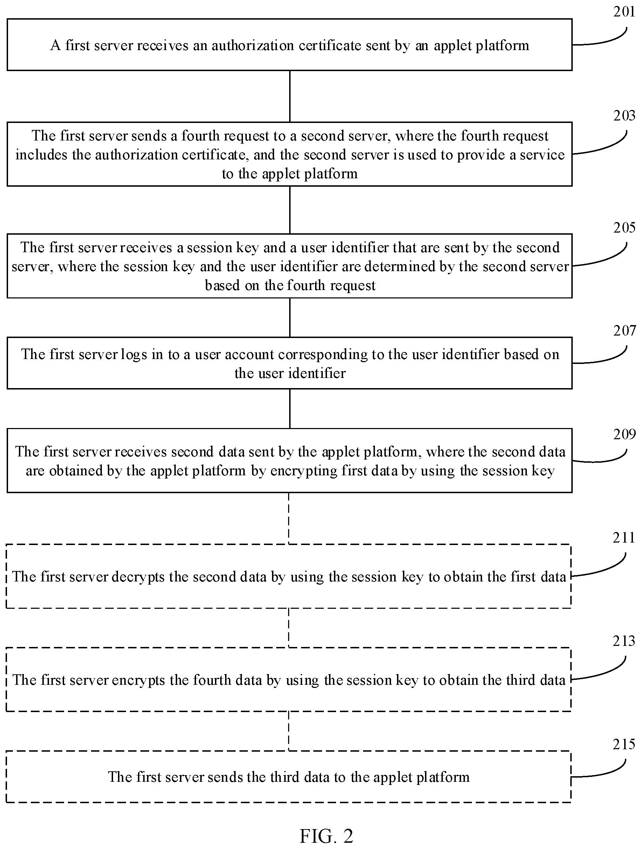

FIG. 2 is a flowchart illustrating a key negotiation method for an applet application, according to some embodiments. It can be understood that the method can be performed by any apparatus, device, platform, or device cluster having computing and processing capabilities. Reference is made to FIG. 2. The key negotiation method for an applet application provided in some embodiments of this specification is applied to a first server, and the first server is used to provide a service to the applet application. The method includes step 201 to step 215.

Step 201: The first server receives an authorization certificate sent by an applet platform, where the authorization certificate is a certificate indicating that a second server authorizes the first server to request a session key.

During specific implementation, reference is made to related descriptions of the first server in step 109, and details are omitted here for simplicity.

Step 203: The first server sends a fourth request to the second server, where the fourth request includes the authorization certificate, and the second server is used to provide a service to the applet platform.

The fourth request is used to request the second server to send the session key and a user identifier.

After the second server receives the fourth request sent by the first server, the second server acquires, based on the authorization certificate, the session key and the user identifier that correspond to the authorization certificate. The second server sends the session key and the user identifier to the first server.

During specific implementation, reference is made to related descriptions of the second server in step 109, and details are omitted here for simplicity.

Step 205: The first server receives the session key and the user identifier that are sent by the second server, where the session key and the user identifier are determined by the second server based on the fourth request, and the session key is the same as a session key stored in the applet platform.

Step 207: The first server logs in to a user account corresponding to the user identifier based on the user identifier.

During specific implementation, reference is made to related descriptions of the first server in step 109, and details are omitted here for simplicity.

In some embodiments, after step 207 is performed, the method further includes step 209: The first server receives second data sent by the applet platform, where the second data are obtained by the applet platform by encrypting the first data by using the session key.

During specific implementation, reference is made to related descriptions of the first server in step 115, and details are omitted here for simplicity.

Step 211: The first server decrypts the second data by using the session key to obtain the first data.

During specific implementation, reference is made to related descriptions of the first server in step 115, and details are omitted here for simplicity.

In some embodiments, after step 211 is performed, the method further includes step 213: The first server encrypts fourth data by using the session key to obtain third data.

Before step 213, the first server can provide a service to the applet application based on the first data, and generate fourth data when providing a service to the applet application. In other words, the fourth data are generated when a server is provided for the applet application based on the first data.

During specific implementation, reference is made to related descriptions of the first server in step 117, and details are omitted here for simplicity.

Step 215: The first server sends the third data to the applet platform.

During specific implementation, reference is made to related descriptions of the first server in step 117, and details are omitted here for simplicity.

As such, the session key that is the same as the session key on the first server is stored on the applet platform, instead of storing the session key in the applet application such that the applet application cannot access the session key. Therefore, an attacker who attacks the applet application cannot steal the session key, thereby reducing a risk of key leakage and enhancing security.

In addition, the session key is associated with a login status of a user. In other words, the session key is valid as long as the user account is logged in. When the user account is logged in again, the session key is automatically updated, thereby further improving security of the session key.

In addition, the session key does not need to be stored in the applet application, and a developer does not need to implement complex encryption logic on the applet application, thereby simplifying logic of the applet application.

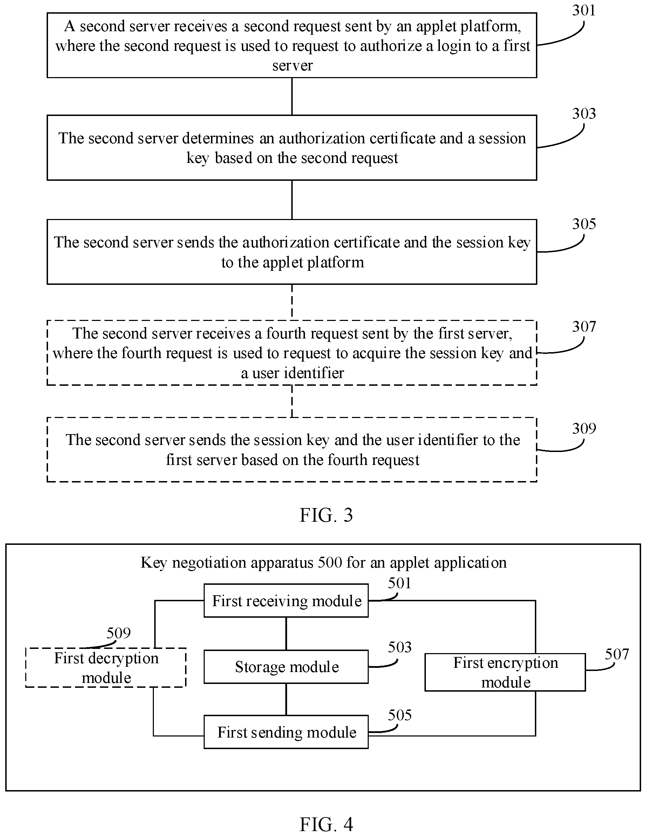

FIG. 3 is a flowchart illustrating a key negotiation method for an applet application, according to some embodiments. It can be understood that the method can be performed by any apparatus, device, platform, or device cluster having computing and processing capabilities. Reference is made to FIG. 3. The key negotiation method for an applet application provided in some embodiments of this specification is applied to a second server, and the second server is used to provide a service to the applet platform. The method includes step 301 to step 309.

Step 301: The second server receives a second request sent by the applet platform, where the second request is used to request to authorize a login to a first server.

During specific implementation, reference is made to related descriptions of the second server in step 103, and details are omitted here for simplicity.

Step 303: The second server determines an authorization certificate and a session key based on the second request.

During specific implementation, reference is made to related descriptions of the second server in step 103, and details are omitted here for simplicity.

Step 305: The second server sends the authorization certificate and the session key to the applet platform.

During specific implementation, reference is made to related descriptions of the second server in step 103, and details are omitted here for simplicity.

In some embodiments, after step 305 is performed, the method further includes step 307: The second server receives a fourth request sent by the first server, where the fourth request is used to request to acquire the session key and a user identifier.

During specific implementation, reference is made to related descriptions of the second server in step 203, and details are omitted here for simplicity.

Step 309: The second server sends the session key and the user identifier to the first server based on the fourth request.

During specific implementation, reference is made to related descriptions of the second server in step 203, and details are omitted here for simplicity.

As such, the session key that is the same as the session key on the first server is stored on the applet platform, instead of storing the session key in the applet application such that the applet application cannot access the session key. Therefore, an attacker who attacks the applet application cannot steal the session key, thereby reducing a risk of key leakage and enhancing security.

In addition, the session key is associated with a login status of a user. In other words, the session key is valid as long as the user account is logged in. When the user account is logged in again, the session key is automatically updated, thereby further improving security of the session key.

In addition, the session key does not need to be stored in the applet application, and a developer does not need to implement complex encryption logic on the applet application, thereby simplifying logic of the applet application.

For better understanding, the key negotiation method for an applet application and the data processing method after the key negotiation are described below with reference to the processing completed by the applet application, the applet platform, the first server, and the second server through cooperation. Specifically, the described process can include step 401 to step 447 (some of the steps are optional). For details, reference is made to the description in the following embodiments.

Step 401: An applet application sends a first request to an applet platform, where the first request is used to request to acquire authorization information of a first server. Correspondingly, the applet platform receives the first request.

During specific implementation, reference is made to related descriptions in step 101, and details are omitted here for simplicity.

Step 403: The applet platform sends a second request to a second server, where the second request is used to request to authorize a login to the first server, and the second server is used to provide a service to the applet platform. Correspondingly, the second server receives the second request.

During specific implementation, reference is made to related descriptions in step 103, and details are omitted here for simplicity.

Step 405: The second server determines, based on the second request, an authorization certificate used to log in to the first server, and a session key for communication between the applet platform and the first server.

During specific implementation, reference is made to related descriptions in step 103, and details are omitted here for simplicity.

Step 407: The second server sends the authorization certificate and the session key to the applet platform, and correspondingly, the applet platform receives the authorization certificate and the session key.

Step 409: The applet platform stores the session key.

Step 411: The applet platform sends the authorization certificate to the applet application, and correspondingly, the applet application receives the authorization certificate.

Step 413: The applet application sends, to the applet platform, a request for sending the authorization certificate to the first server.

Step 417: The applet platform sends the authorization certificate to the first server based on the request. Correspondingly, the first server receives the authorization certificate.

Step 419: The first server sends, to the second server, a request for acquiring the session key and a user identifier. Correspondingly, the second server receives the request.

Step 421: The second server sends, to the first server based on the request, the session key that is the same as that of the applet platform and the user identifier. Correspondingly, the first server receives the session key and the user identifier.

Step 423: The first server stores the session key.

Step 425: The first server authenticates a user identity based on the user identifier.

Step 427: After determining that the user identity authentication succeeds, the first server logs in to a user account corresponding to the user identifier.

Step 429: The first server sends user login status information to the applet platform, where the user login status information can include a user temporary identity. Correspondingly, the applet platform receives the user login status information.

Step 431: The applet platform returns a login result to the applet application to notify the applet application whether the login to the first server succeeds.

Step 433: The applet application sends a third request to the applet platform, where the third request includes first data. Correspondingly, the applet platform receives the third request.

Step 435: The applet platform encrypts the first data by using the session key based on the third request to obtain second data.

Step 437: The applet platform sends the second data to the first server, where the second data are decrypted by the first server by using the session key to obtain the first data. Correspondingly, the first server receives the second data.

Further, when the applet platform sends the second data to the first server, the applet platform sends the user temporary identity to the first server.

Step 439: The first server decrypts the second data by using the session key that is the same as the session key stored on the applet platform, to obtain the first data.

Further, the first server receives the user temporary identity sent by the applet platform, and authenticates the user based on the user temporary identity.

Step 441: The first server encrypts fourth data by using the session key to obtain third data, where the fourth data are generated when a service is provided for the applet application based on the first data.

Step 443: The first server sends the third data to the applet platform. Correspondingly, the applet platform receives the third data.

Step 445: The applet platform decrypts the third data by using the session key to obtain the fourth data.

Step 447: The applet platform returns response information of the first data to the applet application, where the response information includes the fourth data. Correspondingly, the applet application receives the fourth data.

Some implementations of this specification further provide a key negotiation apparatus for an applet application. The key negotiation apparatus for an applet application can be any apparatus, device, platform, or device cluster having computing and processing capabilities. Reference is made to FIG. 4. The key negotiation apparatus for an applet application provided in some embodiments of this specification is applied to an applet platform. The apparatus 500 includes a first receiving module 501, a first sending module 505, and a storage module 503. The first receiving module 501 is configured to receive a first request sent by the applet application, where the first request is used to request to authorize a login to a first server, and the first server is used to provide a service to the applet application.

The first sending module 505 is configured to send a second request to a second server, where the second request is used to request to authorize a login to the first server, and the second server is used to provide a service to the applet platform.

The first receiving module 501 is configured to receive an authorization certificate and a session key that are sent by the second server, where the authorization certificate and the session key are determined by the second server based on the second request.

The storage module 503 is configured to store the session key.

The first sending module 505 is configured to send the authorization certificate to the first server, where the authorization certificate is a certificate indicating that the second server authorizes the first server to request the session key.

In some embodiments, the apparatus further includes a first encryption module 507. The first receiving module 501 is configured to receive a third request sent by the applet application, where the third request includes first data.

The first encryption module 507 is configured to encrypt the first data by using the session key based on the third request to obtain second data.

The first sending module 505 is configured to send the second data to the first server, where the second data are decrypted by the first server by using the session key to obtain the first data.

In some embodiments, the apparatus further includes a first decryption module 509. The first receiving module 501 is configured to receive third data sent by the first server, where the third data are obtained by the first server by encrypting fourth data by using the session key.

The first decryption module 509 is configured to decrypt the third data by using the session key to obtain the fourth data.

The first sending module 505 is configured to send the fourth data to the applet application.

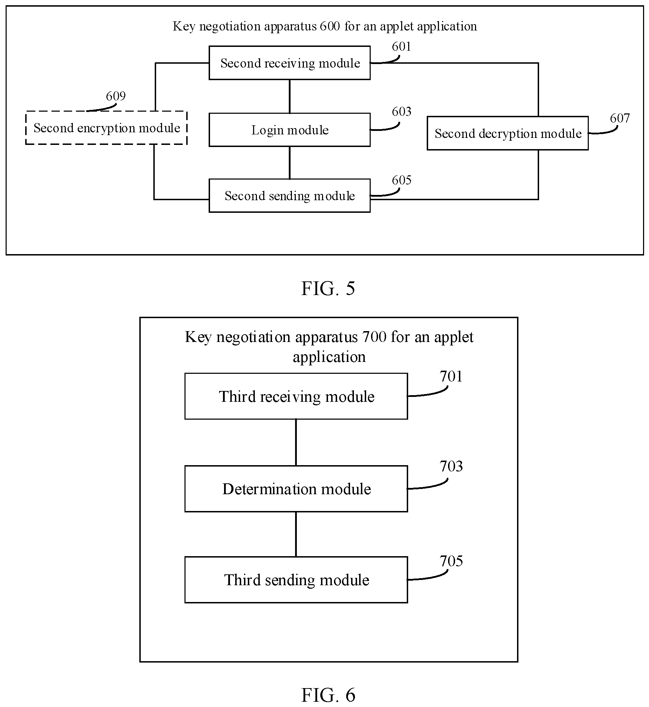

Some implementations of this specification further provide a key negotiation apparatus for an applet application. The key negotiation apparatus for an applet application can be any apparatus, device, platform, or device cluster having computing and processing capabilities. Reference is made to FIG. 5. The key negotiation apparatus for an applet application provided in some embodiments of this specification is applied to a first server, and the first server is used to provide a service to the applet application. The apparatus 600 includes a second receiving module 601, a second sending module 605, and a login module 603. The second receiving module 601 is configured to receive an authorization certificate sent by an applet platform, where the authorization certificate is a certificate indicating that a second server authorizes the first server to request a session key.

The second sending module 605 is configured to send a fourth request to the second server, where the fourth request includes the authorization certificate, and the second server is used to provide a service to the applet platform.

The second receiving module 601 is configured to receive the session key and a user identifier that are sent by the second server, where the session key and the user identifier are determined by the second server based on the fourth request.

The login module 603 is configured to log in to a user account corresponding to the user identifier based on the user identifier.

In some embodiments, the apparatus further includes a second decryption module 607. The second receiving module 601 is configured to receive second data sent by the applet platform, where the second data are obtained by the applet platform by encrypting first data by using the session key.

The second decryption module 607 is configured to decrypt the second data by using the session key to obtain the first data.

In some embodiments, the apparatus further includes a second encryption module 609. The second encryption module 609 is configured to encrypt fourth data by using the session key to obtain third data, where the fourth data are generated when a service is provided for the applet application based on the first data. The second sending module 605 is configured to send the third data to the applet platform.

Some implementations of this specification further provide a key negotiation apparatus for an applet application. The key negotiation apparatus for an applet application can be any apparatus, device, platform, or device cluster having computing and processing capabilities. Reference is made to FIG. 6. The key negotiation apparatus for an applet application provided in some embodiments of this specification is applied to a second server, and the second server is used to provide a service to the applet platform. The apparatus 700 includes a third receiving module 701, a third sending module 705, and a determination module 703. The third receiving module 701 is configured to receive a second request sent by the applet platform, where the second request is used to request to authorize a login to a first server.

The determination module 703 is configured to determine an authorization certificate and a session key based on the second request.

The third sending module 705 is configured to send the authorization certificate and the session key to the applet platform.

In some embodiments, the third receiving module 701 is configured to receive a fourth request sent by the first server, where the fourth request is used to request to acquire the session key and a user identifier.

The third sending module 705 is configured to send the session key and the user identifier to the first server based on the fourth request.

Some embodiments of this specification provide a computer-readable storage medium, where the computer-readable storage medium stores a computer program, and when the computer program is executed on a computer, the computer is enabled to perform the method according to any one of the embodiments of this specification.

Some embodiments of this specification provide a computing device, including a memory and a processor. The memory stores executable code, and the processor executes the executable code to implement the method according to any one of the embodiments of this specification.

It can be understood that the structure shown in some embodiments of this specification does not constitute a specific limitation on the key negotiation apparatus for an applet application. In some other embodiments of this specification, the key negotiation apparatus for an applet application can include more or fewer components than those shown in the figure, combine some components, split some components, or have different component arrangements. The illustrated components can be implemented by hardware, software, or a combination of software and hardware.

Since content such as information exchanges and execution processes between the modules of the above-mentioned apparatuses and systems are based on a same concept as the method embodiments of this specification, for specific content, reference can be made to the description in the method embodiments of this specification. Details are omitted here for simplicity.

Some embodiments of this specification are described in a progressive way. For same or similar parts of the embodiments, mutual references can be made to the embodiments. Each embodiment focuses on a difference from other embodiments. Particularly, the apparatus embodiments are briefly described since they are basically similar to the method embodiments. For related parts, references can be made to related descriptions in the method embodiments.

A person skilled in the art should be aware that, in the above-mentioned one or more examples, functions described in this application can be implemented by hardware, software, pendant, or any combination thereof. When these functions are implemented by software, they can be stored in a computer-readable medium or transmitted as one or more instructions or code on the computer-readable medium.

The objectives, technical solutions, and beneficial effects of this application are further described in detail in the above-mentioned specific implementations. It should be understood that the above-mentioned descriptions are specific implementations of this application, but are not intended to limit the protection scope of this application. Any modification, equivalent replacement, or improvement made based on the technical solutions of this application shall fall within the protection scope of this application.

## Claims

1. A key negotiation method for an applet platform, wherein the method is applied to an applet platform and comprises:
receiving a first request sent by the applet application, wherein the first request is used to request to authorize a login to a first server, and the first server is used to provide a service to the applet application;
sending a second request to a second server, wherein the second request is used to request to authorize a login to the first server, and the second server is used to provide a service to the applet platform;
receiving an authorization certificate and a session key that are sent by the second server, wherein the authorization certificate and the session key are determined by the second server based on the second request;
storing the session key; and
sending the authorization certificate to the first server, wherein the authorization certificate is a certificate indicating that the second server authorizes the first server to request the session key.

2. The method according to claim 1, after the sending the authorization certificate to the first server, further comprising:
receiving a third request sent by the applet application, wherein the third request comprises first data;
encrypting the first data by using the session key based on the third request to obtain second data; and
sending the second data to the first server, wherein the second data are decrypted by the first server by using the session key to obtain the first data.

3. The method according to claim 1 or 2, after the sending the authorization certificate to the first server, further comprising:
receiving third data sent by the first server, wherein the third data are obtained by the first server by encrypting fourth data by using the session key;
decrypting the third data by using the session key to obtain the fourth data; and
sending the fourth data to the applet application.

4. A key negotiation method for an applet application, wherein the method is applied to a first server, the first server is used to provide a service to the applet application, and the method comprises:
receiving an authorization certificate sent by an applet platform, wherein the authorization certificate is a certificate indicating that a second server authorizes the first server to request a session key;
sending a fourth request to the second server, wherein the fourth request comprises the authorization certificate, and the second server is used to provide a service to the applet platform;
receiving the session key and a user identifier that are sent by the second server, wherein the session key and the user identifier are determined by the second server based on the fourth request; and
logging in to a user account corresponding to the user identifier based on the user identifier.

5. The method according to claim 4, after the logging in to a user account corresponding to the user identifier based on the user identifier, further comprising:
receiving second data sent by the applet platform, wherein the second data are obtained by the applet platform by encrypting first data by using the session key; and
decrypting the second data by using the session key to obtain the first data.

6. The method according to claim 5, after the decrypting the second data by using the session key to obtain the first data, further comprising:
providing a service to the applet application based on the first data;
generating fourth data when providing a service to the applet application;
encrypting the fourth data by using the session key to obtain third data; and
sending the third data to the applet platform.

7. A key negotiation method for an applet application, wherein the method is applied to a second server, the second server is used to provide a service to an applet platform, and the method comprises:
receiving a second request sent by the applet platform, wherein the second request is used to request to authorize a login to a first server;
determining an authorization certificate and a session key based on the second request; and
sending the authorization certificate and the session key to the applet platform.

8. The method according to claim 7, after the sending the authorization certificate and the session key to the applet platform, further comprising:
receiving a fourth request sent by the first server, wherein the fourth request is used to request to acquire the session key and a user identifier; and
sending the session key and the user identifier to the first server based on the fourth request.

9. A key negotiation apparatus for an applet application, wherein the apparatus is applied to an applet platform, and comprises a first receiving module, a first sending module, and a storage module, wherein
the first receiving module is configured to receive a first request sent by the applet application, wherein the first request is used to request to authorize a login to a first server, and the first server is used to provide a service to the applet application;
the first sending module is configured to send a second request to a second server, wherein the second request is used to request to authorize a login to the first server, and the second server is used to provide a service to the applet platform;
the first receiving module is configured to receive an authorization certificate and a session key that are sent by the second server, wherein the authorization certificate and the session key are determined by the second server based on the second request;
the storage module is configured to store the session key; and
the first sending module is configured to send the authorization certificate to the first server, wherein the authorization certificate is a certificate indicating that the second server authorizes the first server to request the session key.

10. A key negotiation apparatus for an applet application, wherein the apparatus is applied to a first server, the first server is used to provide a service to the applet application, and the apparatus comprises a second receiving module, a second sending module, and a login module, wherein
the second receiving module is configured to receive an authorization certificate sent by an applet platform, wherein the authorization certificate is a certificate indicating that a second server authorizes the first server to request a session key;
the second sending module is configured to send a fourth request to the second server, wherein the fourth request comprises the authorization certificate, and the second server is used to provide a service to the applet platform;
the second receiving module is configured to receive the session key and a user identifier that are sent by the second server, wherein the session key and the user identifier are determined by the second server based on the fourth request; and
the login module is configured to log in to a user account corresponding to the user identifier based on the user identifier.

11. A key negotiation apparatus for an applet application, wherein the apparatus is applied to a second server, the second server is used to provide a service to an applet platform, and the apparatus comprises a third receiving module, a third sending module, and a determination module, wherein
the third receiving module is configured to receive a second request sent by the applet platform, wherein the second request is used to request to authorize a login to a first server;
the determination module is configured to determine an authorization certificate and a session key based on the second request; and
the third sending module is configured to send the authorization certificate and the session key to the applet platform.

12. A computing device, comprising a memory and a processor, wherein the memory stores executable code, and the processor executes the executable code to implement the method according to any one of claims 1 to 8.
